# EUROPEAN PATENT APPLICATION

(11) **EP 1 734 347 A2**
(43) Date of publication of application: **20.12.2006**
(21) Application number: 06253123.1
(22) Date of filing: 15.06.2006
(51) Int. Cl.: G01F 1/74, G01N 9/24

(54) **Apparatus for metering consumption and carbon dioxide content of natural gas**

(30) Priority: 15.06.2005 GB 0512207
(71) Applicant: POLYMETERS RESPONSE INTERNATIONAL LIMITED, Winchester, Hampshire SO23 7RX (GB)
(72) Inventor: Singhal, Sanjaya, Udaipur 313001 (IN)
(74) Representative: Crawford, Andrew Birkby

(57) **Abstract**

A gas metering system comprising a gas meter and contaminant detection apparatus, the apparatus comprising a mechanism for determining a value indicative of the amount of contaminant, such as carbon dioxide, present in the gas. Preferably the mechanism comprises an infrared light source for emitting infrared light of preferably 4200nm and a receiver for receiving the light, the light source and receiver arranged within a housing which receives natural gas. The apparatus further comprises processing means for comparing the level of contaminant present and volume of gas measured by the gas meter in order to determine an accurate value for the gas consumption by analysing the level of light received by the receiver.

## Description

The present invention relates to contaminant detection in gas. In particular, the invention relates to a metering apparatus for determining the level of a contaminant such as carbon dioxide in natural gas.

Natural gas is a mixture of combustible gases the bulk component of which is low molecular weight alkanes such as methane and ethane. A frequent contaminant of natural gas is carbon dioxide, carbon monoxide or water. When used for heating purposes, the presence of the contaminant in natural gas decreases its calorific value per unit of volume giving the consumer less heat for the volume of gas that has been purchased.

The consumer, when he buys the gas from the supplier is generally metered using a measure for volume. Traditional gas meters measure the volume flow and have no means of detecting the presence of the contaminant in the gas.

In light of the above problems, it is an object of the present invention to provide a gas metering arrangement which can accurately determine the amount of contaminant in gas in real time.

According to a first aspect the present invention provides a gas metering system comprising:
a gas meter for providing a first value for a volume of gas entering the system;
a contaminant detection apparatus comprising:
a housing including an inlet for providing gas into the housing;
a mechanism for determining a contaminant value indicative of the amount of contaminant present in the gas;
a processing means for comparing the first value obtained from the gas meter and the contaminant value obtained by the mechanism in order to calculate a value for the amount of consumed gas.
In a preferred embodiment the predetermined wavelength of the transmitted infrared light is about 4200nm.

Further, the housing may be in the form of a tubing and the transmission means and reception means can be positioned on opposite walls of the tubing such that the gas is adapted to flow therebetween.

In order that the present invention be more readily understood, an embodiment thereof will be described by way of example, with reference to the accompanying drawings in which:
Fig 1 shows an overall schematic view of the preferred embodiment of the present invention;
Fig. 2 shows a perspective view of the contaminant detection apparatus according to a preferred embodiment of the present invention.

.As will be apparent from the following description, the preferred embodiment of the present invention is in the form of a system comprising a housing which forms part of a contamination detection apparatus, and a gas meter. The housing is arranged within the gas meter and gas is directed to flow through the housing in order to detect a contaminant such as carbon dioxide. However, it will be appreciated that the contamination detection apparatus may be arranged separately from the gas meter but the two entities will cooperate in order to calculate an accurate value for gas consumption.

In addition, the contaminant described in the foregoing description will be carbon dioxide but the present invention is not limited to the detection of such a contaminant. Other contaminants present in natural gas such as carbon monoxide and water may also be detected by the contaminant detection apparatus.

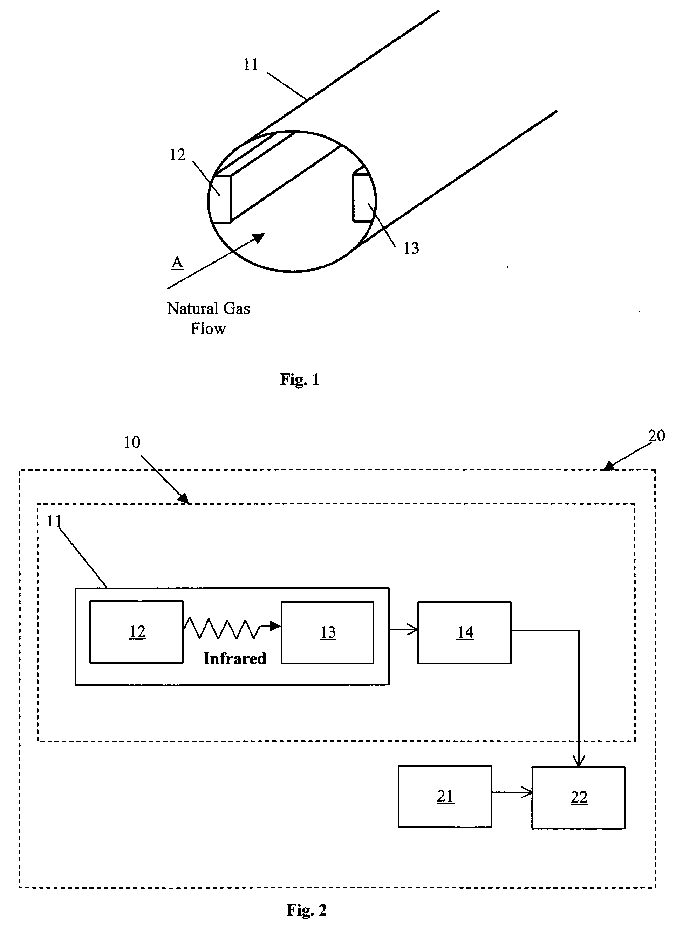

Fig 1 shows a preferred embodiment of the gas metering system. The system comprises a contamination detection apparatus 10 and a natural gas meter 20. As shown in the perspective view in Fig 2, the contamination detection apparatus 10 comprises a tubular housing 11. In this embodiment the housing 11 is arranged in the gas meter 20. It will be appreciated that the housing 11 may be of any suitable shape for arrangement in a gas metering system.

The arrangement is such that natural gas flows from an inlet (not shown) into the housing 11 and in direction A through the housing 11 across which an infrared emitter 12 which produces light at a wavelength in the region of 4200 nm and an infrared receiver 13 sensitive to this frequency are positioned. This wavelength is chosen because the infrared spectra of all alkanes show no absorbance of infrared light in the region of a wavelength of about 4200 nm whereas carbon dioxide has a characteristic of absorbing nearly all light at this wavelength. Amongst all the naturally occurring non-combustible gases which contaminate natural gas, carbon dioxide is the only one with a strong absorbance of infrared light at the wavelength of 4200 nm.

The receiver 13 is positioned on an opposite wall of the housing 11 to the emitter 12. However, it will be appreciated that the relative positioning of the emitter 12 and receiver 13 is not limited to this specific arrangement and is such that the receiver 13 is positioned in relation to the emitter 12 so as to detect the particular frequency of light emitted from the emitter 11.

Periodically (or continuously) the emitter 12 transmits the IR light and the receiver 13 produces a signal proportional to the intensity of light received by it. To achieve this purpose, a controller 14 processes the light received by the receiver 13 and produces a signal indicative of the intensity of the received light.

When CO₂ is not present in the gas, the controller 14 will produce a high signal and when CO₂ is present, the signal strength will be lower. The emitter 12 and receiver 13 are calibrated such that the output from the receiver 13 when no carbon dioxide is present in the flowing gas reads zero. The measure of the intensity of light received is proportional to the amount of CO₂ contamination in the gas and using this relationship, the controller 14 determines a value of the amount of CO₂ contamination in the gas.

In addition to the CO₂ detection apparatus 10, the gas meter 20 further comprises a volume sensor 21 which determines a first value for the gas being consumed by a user and also comprises a processor 22 for using the value of the CO₂ detected by the CO₂ detection apparatus 10 and calculating a second value of the gas consumed by the user by deducting the CO₂ value from the first value. It will be appreciated that the processor may be located in the CO₂ detection apparatus 10 and as such would receive a first value from the volume sensor 21 of the gas meter 20.

The apparatus 10 is thus able to detect the presence of and the amount of inert CO₂ present in the gas flowing through the gas meter 20. This amount, in real time, is deducted from the volume measured by the gas meter 20. Thus the gas meter 20 reads the amount of natural gas less any carbon CO₂ present in it.

In a further embodiment which is not shown in the figure, the gas meter is provided with a gas chamber containing a small predetermined amount of ideal gas. The ideal gas is released into the housing of the contamination detection apparatus and the IR receiver 13 will determine the amount of ideal gas CO₂ contamination in the ideal gas. This value will be stored in a storage means such as a memory chip (not shown) and after the real CO₂ value has been calculated, the real CO₂ value and ideal gas CO₂ value will be compared to produce a differential value. This value will be used to provide a more accurate value for the amount of gas consumption by taking into account temperature and pressure variations which may affect the gas consumption value.

It will be appreciated that although the receiver 13 and controller 14 are shown as different elements in the schematic diagram of Fig. 2, they may be combined in a single element providing both functions.

It should be noted that the gas meter may be used in a dwelling such as a block of flats where each meter located in each flat would be provided with its own CO₂ detection apparatus. Alternatively or in addition, the CO₂ detection apparatus may be located on the entry of the gas supply into the block of flats so as to provide a CO₂ detection level for the gas supply entering the block of flats, and this CO₂ level may be sent to each gas meter for calculation of an accurate value for gas consumption. Accordingly the CO₂ detection apparatus may comprise a wireless and/or wired communication means (not shown) adapted to send a signal indicative of the amount of CO₂ present in the gas entering the block of flats. Moreover the gas meter would also have a corresponding communicating means which can receive such a signal from the CO₂ detection apparatus.

## Claims

1. A gas metering system comprising:
a gas meter (20) for providing a first value for a volume of gas entering the system;
a contaminant detection apparatus (10) comprising:
a housing (11) including an inlet for providing gas into the housing;
a mechanism (12,13,14,15) for determining a contaminant value indicative of the amount of contaminant present in the gas;
a processing means (22) for comparing the first value obtained from the gas meter and the contaminant value obtained by the mechanism in order to calculate a value for the amount of consumed gas.

2. The system of claim 1, wherein the mechanism comprises:
light transmission means (12) for transmitting light of a predetermined wavelength in the housing;
light reception means (13) for receiving the infrared light of the predetermined wavelength;
control means (14) for providing a first signal indicative of the intensity of the received light; and
determining means (15) for determining a contaminant value from the level of the first signal.

3. The system of claim 2 wherein the light of the predetermined wavelength is infrared light.

4. The system according to claim 1, 2 or 3 wherein the contaminant is CO₂, CO and/or water.

5. The system of claim 2, 3 of 4 wherein the predetermined wavelength is 4200nm.

6. The system of any of claims 2 to 5 wherein the housing is tubular, and the light transmission means is positioned on one wall of the housing and the light reception means is positioned opposite the light transmission means.

7. The system of any preceding claim wherein the contaminant detection apparatus is located within the gas meter.

8. The system of any of claims 1 to 6 wherein the contaminant detection apparatus is located remote from the gas meter, and the contaminant detection apparatus comprises means for communicating the contaminant value indicative of the amount of contaminant present in the gas to the gas meter.

9. The system of any preceding claims wherein the gas meter comprises:
a volume sensor (21) for measuring the first value of the volume present in the gas entering the system.

10. The system of any of claims 1 to 8 wherein the gas meter comprises:
a gas chamber for storing a predetermined amount of ideal gas, a volume sensor (21) for measuring a real amount of gas entering the system; and calculation means for using the gas stored in the gas chamber and the measurement from the volume sensor in order to calculate the first value.
